# EUROPÄISCHE PATENTANMELDUNG

(11) **EP 1 398 865 A2**
(43) Veröffentlichungstag der Anmeldung: **17.03.2004**
(21) Anmeldenummer: 03103258.4
(22) Anmeldetag: 30.08.2003
(51) Int. Cl.: H02K 9/06, H02K 7/14

(54) **Elektrowerkzeugmaschine mit Gebläse**

(30) Priorität: 12.09.2002 DE 10242414
(71) Anmelder: HILTI Aktiengesellschaft, 9494 Schaan (LI)
(72) Erfinder: Pfisterer, Hans-Jürgen, 76131 Karlsruhe (DE); Cecchin, Holger, 82110 Germering (DE); Wissmach, Walter, 80637 München (DE); Kink, Christoph, 86391 Stadtbergen (DE); Kristen, Ferdinand, 82205 Gilching (DE); Bauer, Rudolf, 86899 Landsberg (DE); Manschitz, Erwin, 82110 Germering (DE)
(74) Vertreter: Wildi, Roland

(57) **Zusammenfassung**

Eine Werkzeugmaschine (1) mit einem bürstenlosen Elektromotor (2) und einem Wechselrichter (3), welche innerhalb eines von einem Gebläse (4) erzeugten Luftstroms (5) eines Luftvolumens (6) zwischen einer Eintrittsöffnung (7) und einer Austrittsöffnung (8) eines Gehäuses (9) angeordnet sind, wobei strömungsrichtungsseitig im Luftstrom (5) der Wechselrichter (3) nach einem Zwischenkreiskondensator (10) sowie vor dem Elektromotor (2) angeordnet ist.

## Beschreibung

Die Erfindung bezeichnet eine Elektrowerkzeugmaschine mit einem Gebläse zur Kühlung eines Elektromotors.

Bei leistungsfähigen Elektrowerkzeugmaschinen, insbesondere Elektrohandwerkzeugmaschinen werden anstatt eines Universalelektromotors bürstenlose Elektromotoren eingesetzt, welche einen Wechselrichter und einen Gleichspannungszwischenkreis mit einem Zwischenkreiskondensator zur Zwischenspeicherung aufweisen. Die Speicherverluste erzeugen eine Abwärme des Zwischenkreiskondensators mit einer bezüglich des Wechselrichters bzw. des Elektromotors niedrigeren Grenztemperatur.

Nach der US6127751 ist bei einer Handwerkzeugmaschine sowohl der Elektromotor als auch die Motorelektronik parallel im Luftstrom eines strömungsrichtungsseitig nachgeordneten Gebläses angeordnet. Nach der DE10021356 weist eine Handwerkzeugmaschine einen bürstenlosen Elektromotor und einen Wechselrichter auf, welche nach der US4766963 zwischen Eintrittsöffnungen und Austrittsöffnungen eines Gehäuses parallel innerhalb von einem Gebläse erzeugten Luftstroms eines Luftvolumens angeordnet sind. Da Bauteile mit verschiedenen Grenztemperaturen vom gleichen Luftstrom parallel gekühlt werden, wird das Kühlpotential des Luftstroms nicht optimal genutzt. Ein Zwischenkreiskondensator ist bei diesen Kühlanordnungen nicht vorhanden.

Zudem weist nach der US5331239 eine kompakte Motor-Wechselrichter-Baueinheit mit einem bürstenlosen Elektromotor mit einem Wechselrichter mit Gleichspannungszwischenkreis mit Zwischenkreiskondensator ein Gebläse auf, dessen Luftstrom zuerst den Zwischenkreiskondensator und dann in Teilströmen den Wechselrichter sowie den Elektromotor kühlt. Für Elektrowerkzeugmaschinen, insbesondere Elektrohandwerkzeugmaschinen mit getrennten Freiräumen im Gehäuse ist eine kompakte Motor-Wechselrichter-Baueinheit ungeeignet.

Die Aufgabe der Erfindung besteht in der Realisierung einer Elektrowerkzeugmaschine mit Gebläse und einem Zwischenkreiskondensator, welches den Luftstrom optimal zur Kühlung nutzt.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Werkzeugmaschine einen bürstenlosen Elektromotor und einen Wechselrichter auf, welche innerhalb eines von einem Gebläse erzeugten Luftstroms eines Luftvolumens zwischen Eintrittsöffnungen und Austrittsöffnungen eines Gehäuses angeordnet sind, wobei der Wechselrichter strömungsrichtungsseitig im Luftstrom der Wechselrichter nach einem Zwischenkreiskondensator sowie vor dem Elektromotor angeordnet ist.

Durch diese strömungsrichtungsseitige Anordnung im Luftstrom ist in Serie der Zwischenkreiskondensator vor dem Wechselrichter und dieser vor dem Elektromotor angeordnet, wobei der Zwischenkreiskondensator, welcher die niedrigste Grenztemperatur aufweist, mit dem frisch angesaugten, kühlsten Luftvolumens und der Elektromotor, welcher die höchste Grenztemperatur aufweist, mit dem wärmsten, die Abwärme vom Zwischenkreiskondensator sowie dem Wechselrichter enthaltenen, Luftvolumen gekühlt wird.

Vorteilhaft ist im Luftstrom strömungsrichtungsseitig das Gebläse hinter dem Elektromotor angeordnet, wodurch das Gebläse mit dem Rotor des Elektromotors baulich vereinigbar ist.

Vorteilhaft ist im Luftstrom strömungsrichtungsseitig das Gebläse vor den Austrittsöffnungen angeordnet, wodurch die maximal erwärmte Luft unmittelbar nach Aussen gelangt.

Vorteilhaft sind die Eintrittsöffnungen für das Luftvolumen im Bereich eines Handgriffs angeordnet, weiter vorteilhaft innenseitig, wodurch ein Ansaugen staubiger Luft vermindert wird.

Vorteilhaft ist im Luftstrom strömungsrichtungsseitig zwischen dem Wechselrichter und dem Elektromotor eine Transformationsmechanik wie ein Getriebe oder Schlagwerk angeordnet, wodurch dessen Abwärme vom erwärmten Luftvolumen ebenfalls aufnehmbar ist.

Vorteilhaft sind parallele Teilluftströme vorhanden in denen weitere Baugruppen angeordnet sind, wodurch diese ohne den Luftströmungspfad zu verlängern kühlbar sind.

Die Erfindung wird bezüglich eines vorteilhaften Ausführungsbeispiels näher erläutert mit einer Darstellung als Elektrohandwerkzeugmaschine.

Nach der Darstellung weist ein Bohrhammer 1 einen bürstenlosen Elektromotor 2 und einen Wechselrichter 3 auf, welche innerhalb eines von einem Gebläses 4 erzeugten Luftstroms 5 eines Luftvolumens 6 zwischen Eintrittsöffnungen 7 und Austrittsöffnungen 8 eines Gehäuses 9 angeordnet sind, wobei strömungsrichtungsseitig im Luftstrom 5 der Wechselrichter 3 nach einem voluminösen Zwischenkreiskondensator 10 sowie vor dem Elektromotor 2 angeordnet ist. Das Gebläse 4 ist strömungsrichtungsseitig hinter dem Elektromotor 2 und vor den Austrittsöffnungen 8 angeordnet. Die Eintrittsöffnungen 7 sind im innenseitigen Bereich eines Handgriffs 11 angeordnet. Im Luftstrom 5 sind strömungsrichtungsseitig zwischen dem Wechselrichter 3 und dem Elektromotor 2 ein Getriebe 12 und ein Schlagwerk 13 angeordnet. In einem bei Eintrittsöffnungen 7' eintretendem und bei Austrittsöffnungen 8 austretendem parallelen Teilluftstrom 5' ist eine Netzanschlusseinheit 14 angeordnet, welche den Anschluss für das Netzkabel 15 und einen Funkentstörfilter beinhaltet. Ein weiterer Teilluftstrom 5", welcher bei den Öffnungen 7" an der Vorderseite des Bohrhammers 1 eintritt, ist für die Kühlung des Schlagwerks 13 vorgesehen.

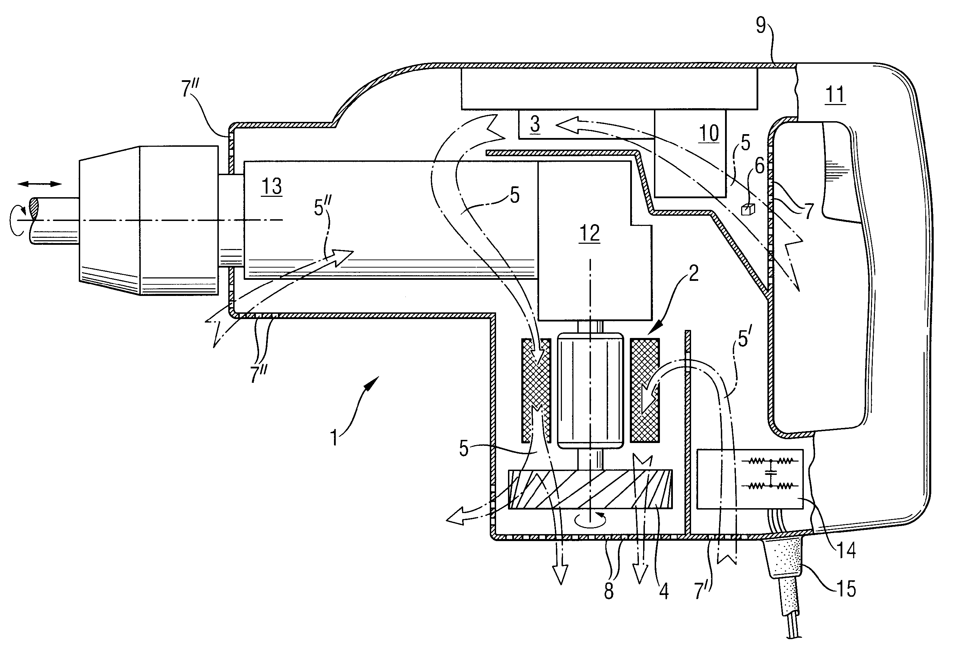

## Patentansprüche

1. Werkzeugmaschine mit einem bürstenlosen Elektromotor (2) und einem Wechselrichter (3), welche innerhalb eines von einem Gebläse (4) erzeugten Luftstroms (5) eines Luftvolumens (6) zwischen einer Eintrittsöffnung (7) und einer Austrittsöffnung (8) eines Gehäuses (9) angeordnet sind, **dadurch gekennzeichnet, dass** strömungsrichtungsseitig im Luftstrom (5) der Wechselrichter (3) nach einem Zwischenkreiskondensator (10) sowie vor dem Elektromotor (2) angeordnet ist.

2. Werkzeugmaschine nach Anspruch 1, **dadurch gekennzeichnet, dass** im Luftstrom (5) strömungsrichtungsseitig das Gebläse (4) hinter dem Elektromotor (2) angeordnet ist.

3. Werkzeugmaschine nach Anspruch 1 oder 2, **dadurch gekennzeichnet, dass** im Luftstrom (5) strömungsrichtungsseitig das Gebläse (4) vor der Austrittsöffnung (8) angeordnet ist.

4. Werkzeugmaschine nach einem der Ansprüche 1 bis 3, **dadurch gekennzeichnet, dass** die Eintrittsöffnung (7) für das Luftvolumen (6) im Bereich eines Handgriffs (11) angeordnet ist.

5. Werkzeugmaschine nach Anspruch 1, **dadurch gekennzeichnet, dass** die Eintrittsöffnung (7) für das Luftvolumen (6) innenseitig im Bereich eines Handgriffs (11) angeordnet ist.

6. Werkzeugmaschine nach einem der Ansprüche 1 bis 5, **dadurch gekennzeichnet, dass** im Luftstrom (5) strömungsrichtungsseitig zwischen dem Wechselrichter (3) und dem Elektromotor (2) eine Transformationsmechanik (12, 13) angeordnet ist.

7. Werkzeugmaschine nach einem der Ansprüche 1 bis 5, **dadurch gekennzeichnet, dass** parallele Teilluftströme (5', 5") vorhanden sind in denen weitere Baugruppen angeordnet sind.
